# EUROPEAN PATENT APPLICATION

(11) **EP 3 650 221 A1**
(43) Date of publication of application: **13.05.2020**
(21) Application number: 18205552.5
(22) Date of filing: 10.11.2018
(51) Int. Cl.: B33Y 40/00, B29C 64/379, B29C 64/30

(54) **PLANT FOR ADDITIVELY MANUFACTURING AT LEAST ONE THREE-DIMENSIONAL OBJECT**

(71) Applicant: Concept Laser GmbH, 96215 Lichtenfels (DE)
(72) Inventor: Kremer, Viktor, 96215 Lichtenfels (DE); Krausser, Benjamin, 96215 Lichtenfels (DE); Hetzel, Ralf, 96231 Bad Staffelstein (DE); Schmidbauer, Christoph, 96465 Neustadt bei Coburg (DE); Wohlfarth, Dagmar, 96215 Lichtenfels (DE)
(74) Representative: Hafner & Kohl PartmbB

(57) **Abstract**

Plant (1) for additively manufacturing at least one three-dimensional object, comprising a at least one item transfer device (6) being configured to transfer an item (9) from a first item position and/or a first item orientation to a second item position and/or a second item orientation, wherein the at least one item transfer device (6) comprises at least one item transfer element (7) comprising a plurality of item transfer element members (8) being interconnected with each other via hinged connections.

## Description

The invention relates to a plant for additively manufacturing at least one three-dimensional object, comprising at least one item transfer device being configured to transfer an item from a first item position and/or first item orientation to a second item position and/or second item orientation.

Plants for additively manufacturing three-dimensional objects are generally known from prior art. Respective plants typically comprise a number of items, such as powder modules, which need to be transferred between different positions and/or orientations during operation of respective plants.

As such, respective plants comprise one or more item transfer devices being configured to transfer an item from a first item position and/or first item orientation to a second item position and/or second item orientation.

Even though known principles of respective item transfer devices provide reliable solutions for transferring items between respective first and second item positions and/or first and second item orientations, a further development of respective item transfer devices is required. Further developments shall specifically aim at technically efficient and robust approaches for transferring items between respective first and second item positions and/or first and second item orientations.

It is the object of the present invention to provide an improved plant for additively manufacturing at least one three-dimensional object, particularly implementing a technically efficient and robust approach for transferring items between respective first and second item positions and/or first and second item orientations.

This object is achieved by the subject-matter of the independent Claims. The Claims depending on the independent Claims relate to possible embodiments of the subject-matters of the independent Claims.

A first aspect of the present invention refers to a plant ("plant") for additively manufacturing at least one three-dimensional object. The plant is typically configured for mass or series production of additively manufactured three-dimensional objects, e.g. technical components.

The plant comprises at least one item transfer device being configured to transfer an item from a first item position and/or a first item orientation to a second item position and/or a second item orientation.

An item can be any functional and/or structural element which needs to be conveyed from a first position to a second position, or vice versa, during operation of the plant. An exemplary embodiment of an item can be a powder module, such as a build module, a dose module, or an overflow module, for instance. Another exemplary embodiment of an item can be a build plate, particularly a build plate which is insertable in a receiving volume of a build module, the build plate being configured to support build material and/or an additively manufactured three-dimensional object. Another exemplary embodiment of an item can be an additively manufactured object. Another exemplary embodiment of an item can be a detecting device configured to detect at least one chemical and/or physical parameter of at least one additive manufacturing process and/or at least one preprocessing process for an additive manufacturing process and/or at least one postprocessing process for an additive manufacturing process. Another exemplary embodiment of an item can be a service and/or repair device configured to perform at least one service and/or repair functionality for at least one functional component of the at least one process station. Another exemplary embodiment of an item can be a cleaning device configured to clean at least one functional component of the at least one process station. Another exemplary embodiment of an item can be an unpacking device configured to configured to remove non-consolidated build material from a powder receiving volume of a powder module so as to unpack an additively manufactured three-dimensional object. Other exemplary embodiments of items are conceivable.

The at least one item transfer device comprises at least one item transfer element comprising a plurality of item transfer element members being interconnected with each other via hinged connections. A respective item transfer element is thus, formed form a plurality of interconnected item transfer element members, whereby the item transfer element members may be pivoted relative to each other due to the hinged connections. Particularly, adjacent item transfer element members may be pivoted relative to each other due to the hinged connections.

Each item transfer element member may comprise a base body comprising a connection interface allowing for interconnecting the respective base body with a, particularly corresponding, connection interface of a base body of an adjacent item transfer element member. Respective connection interfaces may be designed such that the interconnection of adjacent base bodies results in a hingeable or hinged connection of adjacent base bodies which allows for pivoting of the base bodies relative to each other. Respective connection interfaces may be built as or comprise bolted connections, for instance, in which the bolts form respective pivot axes of the base bodies.

As will be more apparent from below, respective item transfer element members may be deemed as chain link members. A respective item transfer element may thus, have a chain-like configuration.

The item transfer element members may be oriented in a specific configuration in which at least one portion of the at least one item transfer element is capable of realizing a shear connection in a specific spatial direction. In this specific configuration, the at least one portion of the item transfer element is capable of exerting push- or pull forces, particularly horizontal and/or vertical push- or pull forces, on an item which is to be transferred from a first item position and/or a first item orientation to a second item position and/or a second item orientation.

The specific configuration of the item transfer element members is typically, given when the item transfer element members of at least a portion of a respective item transfer element are arranged and oriented in the same spatial direction without being pivoted relative to other. The item transfer element members forming the portion of the item transfer element which is capable of exerting push- or pull forces on an item which is to be transferred from a first item position and/or a first item orientation to a second item position and/or a second item orientation are thus, arranged one after another and have the same spatial orientation.

The at least one item transfer element may be moveably supported in an item transfer element support structure, such as a support frame structure, configured to support the at least one item transfer element. The moveable support of the item transfer elements is realized by bearing- or wheel elements provided with the item transfer element members. Thereby, the item transfer element may be moveably supported between a first item transfer element position and/or a first item transfer element orientation and a second item transfer element position and/or a second item transfer element orientation. The item transfer element may be configured to exert the aforementioned push- or pull-force on an item which is to be transferred from a first item position and/or a first item orientation to a second item position and/or a second item orientation by the at least one item transfer element in the first item transfer element position and/or orientation and/or in the second item transfer element position and/or orientation. Exerting a respective push-or pull-force typically, requires a coupling of the respective item transfer element with the respective item allowing for pushing or pulling a respective item.

As mentioned above, the item transfer element members forming the portion of the item transfer element which is capable of exerting push- or pull forces on an item which is to be transferred from a first item position and/or a first item orientation to a second item position and/or a second item are typically, arranged one after another and have the same spatial orientation. Hence, the first item transfer element position and/or orientation and/or the second item transfer element position and/or orientation may correspond to a configuration of the item transfer element in which item transfer element members are arranged one after another and have the same spatial orientation.

The first item transfer element position and/or the first item transfer element orientation may correspond to a retracted position and/or orientation of the at least one item transfer element in the item transfer element support structure, particularly compared with a reference position and/or orientation of the at least one item transfer element, the second item transfer element position and/or the second item transfer element orientation may correspond to an extended position and/or orientation of the at least one item transfer element, particularly compared with the reference position and/or orientation of the at least one item transfer element, or vice versa. In other words, the item transfer element may comprise a first state in which it is retracted and a second state in which it is extended with regard to an item which is to be transferred from a first item position and/or a first item orientation to a second item position and/or a second item orientation.

As indicated above, the hinged connection of adjacent item transfer element members allows for a pivot motion of adjacent item transfer element members relative to each other between a first pivot position and/or a first pivot orientation and a second pivot position and/or a second pivot orientation. The item transfer element members may comprise contact portions, such as stopper portions, which contact each other in the second pivot position and/or second pivot orientation so as to impede a further pivot motion beyond the second pivot position and/or second pivot orientation. Respective contact portions assure that respective item transfer element members, when being in the second pivot position and/or in the second pivot orientation, can only pivot back in the first pivot position and/or first pivot orientation, but not pivot further beyond the second pivot position and/or second pivot orientation. In case that the second pivot position and/or second pivot orientation corresponds to the configuration of the item transfer element in which the item transfer element members are arranged one after another and have the same spatial orientation, then this configuration of the item transfer element members can be stabilized.

The plant or the item transfer device may comprise at least one item transfer element drive unit, e.g. a drive motor and/or a drive gear, assigned to the at least one item transfer element. The item transfer element drive unit is typically, directly or indirectly coupled with the at least one item transfer element, e.g. by a mechanical coupling element, such as a gear-wheel. The item transfer element drive unit is configured to generate a drive force or momentum so as to move the at least one item transfer element between the first position and/or the first orientation and the second position and/or the second orientation. Hence, the spatial orientation of the item transfer element members relative to each other may be changed by operating the item transfer element drive unit. Operating the item transfer element drive unit may thus, result in exerting respective push- or pull forces on an item which is to be transferred from a first item position and/or a first item orientation to a second item position and/or a second item orientation.

The plant or the item transfer device may comprise an item transfer element guiding unit assigned to the at least one item transfer element. The item transfer guiding element may form part of a respective item transfer element support structure. The item transfer element guiding unit is configured to guide the at least one item transfer element when being moved between the first position and/or the first orientation and the second position and/or the second orientation. The item transfer element guiding unit may comprise one or more item transfer element guiding elements, such as guiding rails, guiding profiles, etc., configured to guide the at least one item transfer element when being moved between the first position and/or the first orientation and the second position and/or the second orientation. A respective item transfer element guiding element may particularly, comprise a, particularly recess-like, receiving portion for receiving a respective item transfer element.

A respective item transfer element may be built as or comprises a linear chain, particularly a push-pull-chain. Respective linear chains typically comprise a plurality of chain links having a specific base body profile with contact portions, e.g. interlocking portions, enabling the linear chain to fold-up in one direction only. When unfolded, the contact portions contact each other to form a rigid thrust device.

At least one respective item transfer device may be provided at different locations of the plant examples of which are given below:
According to a first example, a respective item transfer device may be provided with a conveying carriage comprising at least one supporting interface for supporting at least one item. A respective conveying carriage, e.g. a conveying slide, conveying skid, conveying vehicle or conveying wagon, for instance, may be moveably connectable or connected with at least one conveying element, e.g. a conveying rail, so as to be moveable along conveying path defined by the at least one conveying element. A respective conveying carriage typically, comprises at least one supporting interface for supporting at least one item. A respective supporting interface may be any interface allowing for a temporary support of at least one item with a respective conveying carriage, i.e. particularly a base body of a respective conveying carriage.

The first item position and/or the first item orientation in a respective conveying carriage may be a support position and/or a support orientation in which the item is supported by the conveying carriage and the second item position and/or the second item orientation in a respective conveying carriage may be a transfer position and/or transfer orientation in which the item is transferrable or transferred from the conveying carriage to a process station of the plant.

According to a second example, the item transfer device is provided in a process station of the plant and configured to transfer an item from a first item position and/or a first item orientation to a second item position and/or a second item orientation in the process station of the plant, particularly a process station being configured to perform an additive manufacturing process and/or at least one preprocessing process for an additive manufacturing process and/or at least one postprocessing process for an additive manufacturing process.

In the second example, the item transfer device may be particularly, configured to transfer an item from a first item position and/or a first item orientation to a second item position and/or a second item orientation in a process station, particularly a process station being configured to perform an additive manufacturing process and/or at least one preprocessing process for an additive manufacturing process and/or at least one postprocessing process for an additive manufacturing process. Thereby, the first item position and/or the first orientation may be an operating position, in which the item is operable so as to perform an item-related first functionality, and the second item position and/or the second orientation may be a second operating position, in which the item is operable so as to perform an item-related second functionality, or is a non-operating position in which the item is not operable to perform an item-related functionality.

With regard to the exemplary option of providing at least one respective item transfer device with a process station being configured to perform an additive manufacturing process, the item transfer device may be particularly, configured to transfer an item from a first item position and/or a first item orientation to a second item position and/or a second item orientation in a respective process station being configured to perform an additive manufacturing process. Thereby, the item may be a build material application element of a build material application device, the build material application element being configured to apply an amount, particularly a specific amount of build material in the build plane of the process station so as to form a build material layer which is to be selectively irradiated and consolidated by means of at least one energy beam, for instance. Other items provided with a respective process station may be conceivable.

With regard to the exemplary option of providing at least one item transfer device with a process station being configured to perform at least one preprocessing process for an additive manufacturing process, the item transfer device may be particularly, configured to transfer an item from a first item position and/or a first item orientation to a second item position and/or a second item orientation in a respective process station being configured to perform at least one preprocessing process for an additive manufacturing process. Thereby, the item may be a cleaning element, particularly a suction and/or blowing element, of a cleaning device, particularly a sucking and/or blowing device, the cleaning device being configured to remove non-consolidated build material from a powder receiving volume of a powder module, for instance. Other items provided with a respective process station may be conceivable.

With regard to the exemplary option of providing at least one item transfer device with a process station being configured to perform at least one postprocessing process for an additive manufacturing process, the item transfer device may be configured to transfer an item from a first item position and/or a first item orientation to a second item position and/or a second item orientation in a respective process station being configured to perform at least one postprocessing process for an additive manufacturing process. Thereby, the item may be an unpacking element, particularly a suction and/or blowing element, of an unpacking device, the unpacking element being configured to remove non-consolidated build material surrounding a three-dimensional object after the additive manufacture of the three-dimensional object, for instance. Other items provided with a respective process station may be conceivable.

As indicated above, the plant may comprise at least one process station being configured to perform an additive manufacturing process and/or at least one preprocessing process for an additive manufacturing process and/or at least one postprocessing process for an additive manufacturing process. Hence, a respective process station may be configured to perform at least one process-step for the actual additive build-up of at least one three-dimensional object, and/or may be configured to perform at least one process-step for preparing an additive manufacturing process, e.g. by preparing build material for a forthcoming additive manufacturing process, by preparing a powder module, such as a build module, i.e. a module in which the actual additive build-up of a three-dimensional object takes place, for a forthcoming additive manufacturing process, by preparing a process chamber of an additive manufacturing apparatus for a forthcoming additive manufacturing process, etc., and/or may be configured to perform at least one process-step for completing an additive manufacturing process, e.g. by unpacking an additively manufactured three-dimensional object from surrounding non-consolidated build material, by thermally treating an (unpacked) additively manufactured three-dimensional object, by treating the surface of an additively manufactured three-dimensional object, by sieving build material which was not consolidated during a previous additive manufacturing process, etc.

Generally, each process station is provided with suitable functionality for performing its intended functionality, i.e. an additive manufacturing process and/or a preprocessing process and/or a postprocessing process. Thus, each process station comprises a number of functional and/or structural devices which are operable during its operation. Each functional and/or structural device may comprise a number of functional and/or structural units which may comprise a number of functional and/or structural sub-units.

An exemplary embodiment of a process station for performing an additive manufacturing process is an apparatus ("apparatus") for additively manufacturing at least one three-dimensional object by means of successive layerwise selective irradiation and consolidation / solidification of build material layers which can be consolidated / solidified by means of being irradiated with at least one energy beam, i.e. layers of a build material which can be consolidated by means of being irradiated with at least one energy beam. The build material may be provided as a powder, for instance. The build material may be or comprise a ceramic, a polymer, or a metal, for instance. The energy beam may be an electron beam or a laser beam, for instance. The apparatus may be implemented as a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

A respective apparatus typically comprises a build plane. The build plane can be defined as a plane in which the successive layerwise selective irradiation and consolidation of layers of build material which can be consolidated by means of an energy beam can take place during operation of the apparatus. The build plane is typically disposed in a process chamber of the apparatus. The build plane typically extends in or parallel to a bottom wall of the process chamber of the apparatus.

A respective apparatus comprises a number of functional and/or structural devices which are operable during its operation. Each functional and/or structural device may comprise a number of functional and/or structural units which may comprise a number of functional and/or structural sub-units.

A first exemplary functional device of the apparatus is a build material application device configured to apply an amount, particularly a specific amount, of build material in the build plane of the apparatus so as to form a build material layer which is to be selectively irradiated and consolidated by means of the at least one energy beam. A respective build material application device typically comprises at least one build material application element, e.g. a recoating element, configured to apply an amount, particularly a specific amount of build material in the build plane of the apparatus so as to form a build material layer which is to be selectively irradiated and consolidated by means of the at least one energy beam. A respective build material application element may be moveably supported relative to the build plane. A second exemplary functional device is an irradiation device configured to successively selectively irradiate and consolidate respective layers of build material applied in the build plane of the apparatus with at least one energy beam, e.g. an electron beam or a laser beam. A respective irradiation device typically comprises at least one irradiation element, e.g. an energy beam generation element and/or an energy beam deflection element, configured to move an energy beam across the build plane of the apparatus so as to electively irradiate and consolidate respective layers of build material applied in the build plane of the apparatus.

A first exemplary structural device of the apparatus is a support frame structure configured to support at least one functional device and/or at least one further structural device of the apparatus. A respective support frame structure typically comprises at least one support frame element, e.g. bar, rod, etc., configured to support at least one functional device and/or at least one further structural device. Additional functional and/or structural devices are conceivable. A second exemplary structural device is the process chamber of the apparatus. The process chamber typically comprises at least one process chamber wall element delimiting an inner process volume of the process chamber.

An exemplary embodiment of a preprocessing station is a powder module preparation station in which powder modules which are to be used in a forthcoming additive manufacturing process are prepared, e.g. by being filled with build material, cleaned, inertized, etc. A respective powder module preparation station may be built as, comprise or be combined with a sieving station in which fresh build material is sieved and/or mixed with used build material so as to provide a build material composition of desired properties, such as particle size, particle morphology, etc. for a forthcoming additive manufacturing process.

An exemplary functional device of a respective preprocessing station is cleaning device configured to clean powder modules. A further exemplary functional device of a respective preprocessing station is a sieving device configured to sieve build material. Other functional devices are conceivable.

An exemplary structural device of a respective preprocessing station is a support frame structure configured to support at least one functional device and/or at least one further structural device of the preprocessing station. A respective support frame structure typically comprises at least one support frame element, e.g. bar, rod, etc., configured to support at least one functional device and/or at least one further structural device. Other structural devices are conceivable.

An exemplary embodiment of a postprocessing station is an unpacking station in which an additively manufactured three-dimensional object is unpacked from surrounding non-consolidated build material. A respective unpacking station may comprise or be combined with a sieving station in which non-consolidated build material is sieved and/or mixed with fresh build material so as to provide a build material composition of desired properties, such as particle size, particle morphology, etc., for a forthcoming additive manufacturing process. Another exemplary postprocessing station is a thermal treatment station in which an additively manufactured three-dimensional object undergoes a thermal treatment, i.e. particularly a heat treatment, so as to adjust the structural properties of the additively manufactured three-dimensional object, e.g. by relieving internal stresses. Another exemplary postprocessing stations is a surface treatment station in which an additively manufactured three-dimensional object undergoes a surface treatment, i.e. particularly a machining, so as to adjust the surface properties of the additively manufactured three-dimensional object.

An exemplary functional device of a respective postprocessing station is a build material removal device, e. g. a sucking and/or blowing device, configured to remove non-consolidated build material from an additively manufactured three-dimensional object. Other functional devices are conceivable.

An exemplary structural device of a respective postrocessing station is a support frame structure configured to support at least one functional device and/or at least one further structural device of the postrocessing station. A respective support frame structure typically comprises at least one support frame element, e.g. bar, rod, etc., configured to support at least one functional device and/or at least one further structural device. Other structural devices are conceivable.

Other exemplary embodiments of pre- and/or postprocessing stations than the ones mentioned before are conceivable.

The plant typically comprises a plurality of process stations, i.e. at least two process stations. The process stations typically are distributed in an additive manufacturing environment defined by the plant. The additive manufacturing environment may comprise one or more buildings, e.g. a fabric hall, or one or more parts of a building, e.g. rooms. The process stations may be arbitrarily arranged relative to each other in a respective additive manufacturing environment. Exemplary arrangements of respective process stations comprise respective process stations arranged in a line or row, respectively. In either case, the process stations do not physically contact each other, i.e. are particularly not (directly) mechanically coupled, such that there is typically a small (air-)gap between adjacently disposed process stations.

As indicated above, the plant may comprise at least one conveying device configured to convey an item between at least two positions of the plant along a conveying path. A respective conveying path typically, connects at least two positions in a respective additive manufacturing environment.

The at least two positions may be assigned to at least two different process stations. Hence, a conveying path may at least extend between two different process stations, the respective two different process stations may be adjacent process stations or non-adjacent process stations. The conveying device may thus, be configured to convey items between different process stations.

The at least two positions may be located in the same or different buildings, rooms, etc. Hence, a conveying path may extend in one or more different buildings, rooms, etc. The conveying device may be thus, configured to convey items between two different positions which may be located in the same or different buildings, rooms, etc. of an additive manufacturing environment.

A respective conveying device may comprise at least one conveying element defining the at least one conveying path. The at least one conveying element may be at least partially bound to ground, i.e. connected with ground, particularly attached to ground, allowing for easy and stable installation. The at least one conveying element is typically a longitudinal component or a longitudinal component group extending in the additive manufacturing environment. Each portion of the at least one conveying element can represent a respective first or second position in between which a respective item can be conveyed by the conveying device.

The conveying device may comprise a plurality of conveying elements and conveying paths, respectively which may be interconnectable or interconnected with each other so as to form a network of conveying elements and conveying paths, respectively arranged in one or more spatial directions or orientations, respectively. Hence, each conveying element may be provided with a connection interface, i.e. particularly a mechanical connection interface, allowing for interconnecting the respective conveying element with at least one further conveying element.

The conveying device may further comprise at least one conveying carriage, e.g. a conveying slide, conveying skid, conveying vehicle or conveying wagon, for instance, being moveably connectable or connected with the at least one conveying element so as to be moveable along the at least one conveying path. The at least one conveying carriage comprises at least one supporting interface for supporting at least one item.

The at least one conveying element and the at least one conveying carriage may interact with each other so as to form a "conveying couple" allowing for conveying at least one item between a respective first and a respective second position. Thereby, the at least one item is (temporarily) supported by the at least one conveying carriage and the at least one conveying carriage (temporarily) supporting the at least one item is moveable along the conveying path, i.e. particularly moveably supported by the at least one conveying element.

The conveying device is typically a separate device to the at least one process station which is not physically connectable or connected, i.e. particularly not mechanically couplable or coupled, with the at least one process station. Hence, the conveying device is typically to be deemed as a separate device of the plant whose operation is generally, independent from the operation of any process station of the plant. Providing the conveying device as a respective separate device is of advantage for installation, modification and operation of the conveying device. Hence, the conveying device may be generally, installed, modified or operated independent from any of process station of the plant.

This also applies for the case in which a respective conveying element extends through at least one process station. In this case, a respective process station is provided with a, particularly passage- or tunnel-like, opening allowing for that at least one conveying element may at least partially extend in or through a respective process station without actually physically contacting the process station. Hence, the dimensions of the opening in a respective process station are dimensioned in such a manner that at least one conveying element may least partially extend in or through the respective process station without physically contacting the process station.

A respective conveying element may be provided in any dimensions, i.e. particularly, length, shape, etc. As such, a respective conveying element may comprise at least one conveying element portion which extends straight and/or which comprise at least one conveying element portion which extends curved.

With regard to the actual conveyance of a respective conveying carriage along a respective conveying path, the following exemplary options, which may be arbitrarily combined with each other, are given:
A respective conveying element may be configured to generate a conveying force so as to move the at least one conveying carriage along the at least one conveying path. Hence, the conveying element may be moved itself along a respective conveying path. A respective conveying carriage does not have to be provided with an own drive unit in this exemplary embodiment. A respective conveying element may be embodied as a conveying band, a conveying belt, or a conveying chain, for instance.

Additionally or alternatively, a respective conveying carriage may be provided with a drive unit, particularly a drive motor, configured to generate a drive force so as to move the at least one conveying carriage along the at least one conveying path. Hence, the conveying carriage may be self-driven and thus, moves itself along a respective conveying path. A respective conveying element does not need to be provided with an own drive unit in this exemplary embodiment. A respective conveying element may be embodied as a conveying rail, a conveying rack, or any other non-driven conveying track, for instance.

Additionally or alternatively, a moveable traction carriage being provided with a drive unit, particularly a drive motor, configured to generate a drive force so as to move the traction carriage along the at least one conveying path may be provided. A respective traction carriage is self-driven and thus, moves itself along a respective conveying path. Neither a respective conveying element nor a respective conveying carriage needs to be provided with an own drive unit in this exemplary embodiment. A respective traction carriage may be moveably connectable or connected with a respective conveying carriage so as to move a respective conveying carriage along the at least one conveying path. A respective traction carriage may thus, comprise at least one coupling interface configured to establish a (temporary) coupling of the traction carriage with at least one conveying carriage and/or with at least one further traction carriage. In other words, train-like assemblies, particularly goods train-like assemblies, of traction carriages and conveying carriages can be realized which can be individually configured, particularly with regard to the number and order of respective traction carriages and/or conveying carriages.

As is apparent from above, the conveying device may comprise at least two conveying carriages. Thereby, each conveying carriage may comprise a coupling interface configured to establish a coupling with at least one further conveying carriage, particularly so as to form a conveying carriage assembly, and/or with at least one traction carriage. Respective coupling interfaces of conveying carriages and traction carriages may be standardized which allows for an easy, quick and safe coupling and decoupling of conveying carriages and/or traction carriages. Respective coupling interfaces may be built as mechanical coupling interfaces, such as buffer-and-chain-couplings or link-and pin-couplings, for instance. Yet, magnetic coupling interfaces or any other coupling interfaces are conceivable as well.

As mentioned above, a respective conveying carriage may comprise at least one supporting interface configured to support at least one item which is to be conveyed by the conveying carriage along the at least one conveying path. A respective supporting interface allows for a temporary support of a respective item which is to be conveyed by the conveying carriage along the at least one conveying path. A respective support interface may be built as or provided with a support compartment of a base body of a conveying carriage. Hence, a respective conveying carriage may comprise a base body having at least one support compartment configured to support at least one item which is to be conveyed by the conveying carriage along the at least one conveying path. A respective support compartment may form part of a support frame of the conveying carriage or the base body, respectively. The dimensions of a respective support compartment may be adapted to the dimensions of an item which is to be conveyed by the conveying carriage along the at least one conveying path. Hence, a respective support compartment may be embodied as a receptacle configured to at least partially, particularly completely, receive a respective item, for instance. A respective receptacle is typically defined by wall elements of a respective support compartment which may at least partially cover or engage at least one surface of an item which is to be supported by the support compartment.

A respective conveying carriage may comprise at least two supporting interfaces configured to support at least one item which is to be conveyed by the conveying carriage along the at least one conveying path. Respective supporting interfaces may have the same or a different configuration, whereby in the first case the supporting interfaces are configured to support items of same or similar dimensions and/or items of same or similar functionality and in the latter case the supporting interfaces are configured to support items of different dimensions and/or items of different functionality. Hence, respective conveying carriages may be individually provided with a specific arrangement of supporting interfaces so that respective conveying carriages may be specified for conveying a specific arrangement and number of items. Yet, it is also possible that conveying carriages are standardized, i.e. provided with a standardized arrangement of supporting interfaces.

Another aspect of the present invention refers to an item transfer device for a plant for additively manufacturing three-dimensional objects. The item transfer device is configured to transfer an item from a first item position and/or a first item orientation to a second item position and/or a second item orientation and comprises at least one item transfer element comprising a plurality of item transfer element members being interconnected with each other via hinged connections. All annotations regarding the plant also apply to the item transfer device.

Another aspect of the present invention refers to a method for transferring an item from a first item position and/or a first item orientation to a second item position and/or a second item orientation in a plant for additively manufacturing three-dimensional objects, wherein at least one item transfer device as described herein is used for transferring the item from the first item position and/or the first item orientation to the second item position and/or the second item orientation. All annotations regarding the plant also apply to the method.

Exemplary embodiments of the invention are described with reference to the Fig., whereby:
- Fig. 1, 4: each show a principle drawing of a plant for additively manufacturing of at least one three-dimensional object according to an exemplary embodiment; and
- Fig. 2, 3: each show a principle drawing of an item transfer device according to an exemplary embodiment.

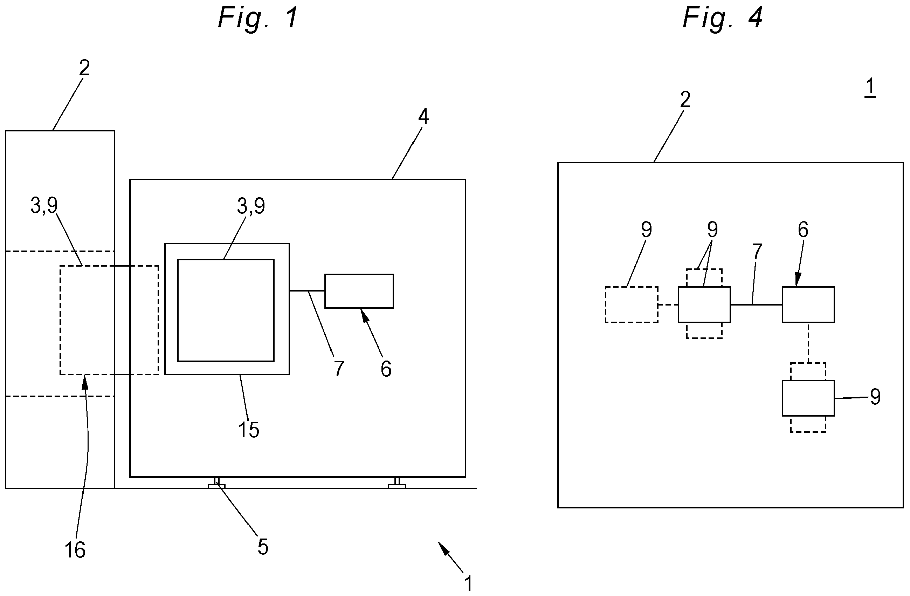

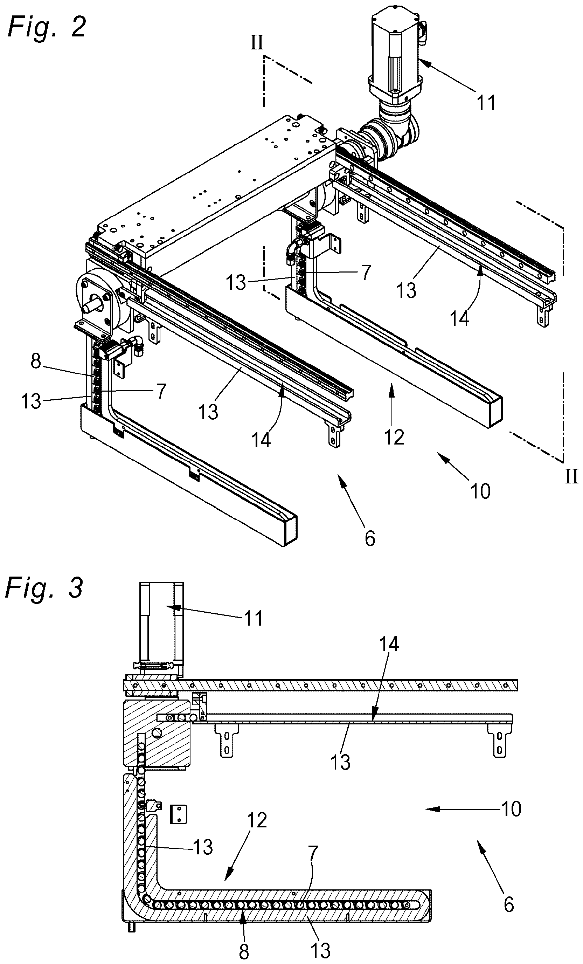

Fig. 1 and 4 each show a principle drawing of a plant 1 for additively manufacturing of at least one three-dimensional object according to an exemplary embodiment, whereby Fig. 1 shows a side-view of a portion of the plant 1 and Fig. 2 shows a top-view of a portion of the plant 1.

The plant 1 is typically, configured for mass or series production of additively manufactured three-dimensional objects, e.g. technical components.

The plant 1 may comprise a number of process stations 2, whereby a respective process station 2 may be configured to perform an additive manufacturing process, or a respective process station 2 may be configured to perform at least one preprocessing process for an additive manufacturing process, or a respective process station 2 may be configured to perform at least one postprocessing process for an additive manufacturing process. Hence, a respective process station 2 may be configured to perform at least one process-step for the actual additive build-up of at least one three-dimensional object, or configured to perform at least one process-step for preparing an additive manufacturing process, e.g. by preparing build material for a forthcoming additive manufacturing process, by preparing a powder module 3, such as a build module, i.e. a module in which the actual additive build-up of a three-dimensional object takes place, for a forthcoming additive manufacturing process, by preparing a process chamber of an additive manufacturing apparatus for a forthcoming additive manufacturing process, etc., or may be configured to perform at least one process-step for completing an additive manufacturing process, e.g. by unpacking an additively manufactured three-dimensional object from surrounding non-consolidated build material, by thermally treating an (unpacked) additively manufactured three-dimensional object, by treating the surface of an (unpacked) additively manufactured three-dimensional object, by sieving build material which was not consolidated during a previous additive manufacturing process by a sieving device, etc.

Generally, each process station 2 is provided with suitable functionality for performing its intended functionality, i.e. an additive manufacturing process and/or a preprocessing process and/or a postprocessing process. Thus, each process station 2 comprises a number of functional and/or structural devices which are operable during its operation. Each functional and/or structural device may comprise a number of functional and/or structural units which may comprise a number of functional and/or structural sub-units.

The plant 1 may further comprise a conveying carriage 4, e.g. a conveying slide, conveying skid, conveying vehicle or conveying wagon, for instance, for conveying an item 9 along a conveying path between two different positions, particularly between two different process stations 2, of the plant 1. The conveying carriage 4 may be moveably connectable or connected with conveying elements 5, e.g. conveying rails, defining a respective conveying path so as to be moveable along the respective conveying path.

The plant 1 comprises an item transfer device 6 being configured to transfer an item 9, e.g. a powder module 3, such as a build module, a dose module, or an overflow module, from a first item position and/or a first item orientation to a second item position and/or a second item orientation.

Even though depicted as a respective powder module 3, an item 9 can be any functional and/or structural element which needs to be conveyed from a first position to a second position, or vice versa, during operation of the plant 1. Hence, a powder module 3 is only an exemplary embodiment of an item 9. Another exemplary embodiment of an item 9 can be a build plate, particularly a build plate which is insertable in a receiving volume of a build module, the build plate being configured to support build material and/or an additively manufactured three-dimensional object. Another exemplary embodiment of an item 9 can be an additively manufactured object. Another exemplary embodiment of an item 9 can be a detecting device configured to detect at least one chemical and/or physical parameter of at least one additive manufacturing process and/or at least one preprocessing process for an additive manufacturing process and/or at least one postprocessing process for an additive manufacturing process. Another exemplary embodiment of an item 9 can be a service and/or repair device configured to perform at least one service and/or repair functionality for at least one functional component of the at least one process station 2. Another exemplary embodiment of an item 9 can be a cleaning device configured to clean at least one functional component of the at least one process station 2. Another exemplary embodiment of an item 9 can be an unpacking device configured to configured to remove non-consolidated build material from a powder receiving volume of a powder module 3 so as to unpack an additively manufactured three-dimensional object. Other exemplary embodiments of items 9 are conceivable.

As is apparent from the exemplary embodiments of Fig. 2, 3, whereby Fig. 2 shows a perspective view of a item transfer device 6 and Fig. 3 shows a cut-view of the item transfer device 6 of Fig. 2, the item transfer device 6 comprises at least one item transfer element 7 comprising a plurality of item transfer element members 8 being interconnected with each other via hinged connections 9. A respective item transfer element 7 is thus, formed form a plurality of interconnected item transfer element members 8, whereby the item transfer element members 8 may be pivoted relative to each other due to the hinged connections.

A respective item transfer element 7 is particularly, built as a linear chain, particularly as a push-pull-chain in the exemplary embodiments of the Fig. Respective item transfer element members 8 may thus, be deemed as chain link members.

Each item transfer element member 8 thus, comprises a base body (not explicitly shown) comprising a connection interface allowing for interconnecting the respective base body with a, particularly corresponding, connection interface of a base body of an adjacent item transfer element member 8. Respective connection interfaces are designed such that the interconnection of adjacent base bodies results in a hingeable or hinged connection of adjacent base bodies which allows for pivoting of the base bodies relative to each other. Respective connection interfaces may be built as or comprise bolted connections, for instance, in which the bolts form respective pivot axes of the base bodies.

The item transfer element members 8 may be oriented in a specific configuration in which at least one portion of the item transfer element 7 is capable of realizing a shear connection in a specific spatial direction. In this specific configuration, the at least one portion of the item transfer element 7 is capable of exerting push- or pull forces, particularly horizontal and/or vertical push- or pull forces, on an item 9 which is to be transferred from a first item position and/or a first item orientation to a second item position and/or a second item orientation.

The specific configuration of the item transfer element members 8 is typically, given when the item transfer element members 8 of at least a portion of a respective item transfer element 7 are arranged and oriented in the same spatial direction without being pivoted relative to other. The item transfer element members 8 forming the portion of the item transfer element 7 which is capable of exerting push- or pull forces on an item 9 which is to be transferred from a first item position and/or a first item orientation to a second item position and/or a second item orientation are thus, arranged one after another and have the same spatial orientation.

The hinged connection of adjacent item transfer element members 8 thus, allows for a pivot motion of adjacent item transfer element members 8 relative to each other between a first pivot position and/or a first pivot orientation and a second pivot position and/or a second pivot orientation. The item transfer element members 8 may comprise contact portions (not explicitly shown), such as stopper portions, which contact each other in the second pivot position and/or second pivot orientation so as to impede a further pivot motion beyond the second pivot position and/or second pivot orientation. Respective contact portions assure that respective item transfer element members 8, when being in the second pivot position and/or in the second pivot orientation, can only pivot back in the first pivot position and/or first pivot orientation, but not pivot further beyond the second pivot position and/or second pivot orientation. The second pivot position and/or second pivot orientation corresponds to the configuration of the item transfer element 7 in which the item transfer element members 8 are arranged one after another and have the same spatial orientation, so that this configuration of the item transfer element members 8 can be stabilized.

As is apparent from Fig. 2, 3, a respective item transfer element 7 may be moveably supported in an item transfer element support structure 10, such as a support frame structure comprising a number of, particularly bar- or rod-like, support frame elements in an angled arrangement, configured to support one or more item transfer elements 7. The moveable support of the item transfer elements 7 is realized by bearing- or wheel elements provided with the item transfer element members 8. Thereby, respective item transfer elements 7 may be moveably supported between a first item transfer element position and/or a first item transfer element orientation and a second item transfer element position and/or a second item transfer element orientation. The item transfer elements 7 may be configured to exert the aforementioned push-force or pull-force on an item 9 which is to be transferred from a first item position and/or a first item orientation to a second item position and/or a second item orientation by respective item transfer elements 7 in the first item transfer element position and/or orientation and/or in the second item transfer element position and/or orientation. Exerting a respective push-force or pull-force typically, requires a coupling of the respective item transfer elements 7 with the respective item 9 allowing for pushing or pulling a respective item 9.

As mentioned before, the item transfer element members 8 forming the portion of the item transfer element 7 which is capable of exerting push- or pull forces on an item 9 which is to be transferred from a first item position and/or a first item orientation to a second item position and/or a second item are typically, arranged one after another and have the same spatial orientation. Hence, the first item transfer element position and/or orientation and/or the second item transfer element position and/or orientation may correspond to a configuration of a respective item transfer element 7 in which item transfer element members 8 are arranged one after another and have the same spatial orientation.

As is further apparent from Fig. 2, 3, the item transfer elements 7 may take a retracted position (shown in Fig. 2, 3) in the item transfer element support structure 10, particularly compared with a reference position and/or orientation. The item transfer elements 7 may also take an extended position (not shown), particularly compared with the reference position and/or orientation. In other words, the item transfer elements 7 may comprise a first state in which the item transfer elements 7 are retracted and a second state in which the item transfer elements 8 are extended with regard to an item 9 which is to be transferred from a first item position and/or a first item orientation to a second item position and/or a second item orientation.

As is further apparent from Fig. 2, 3, the item transfer device 6 may comprise at least one item transfer element drive unit 11, e.g. a drive motor and/or a drive gear, assigned to the item transfer elements 7. The item transfer element drive unit 11 is typically, directly or indirectly coupled with the item transfer elements 7, e.g. by a mechanical coupling element (not explicitly shown), such as a gear-wheel. The item transfer element drive unit 11 is configured to generate a drive force or momentum so as to move the item transfer elements 7 between the first position and/or the first orientation and the second position and/or the second orientation and a respective retracted and extended position. Hence, the spatial orientation of the item transfer element members 8 relative to each other may be changed by operating the item transfer element drive unit 11. Operating the item transfer element drive unit 11 may thus, result in exerting respective push- or pull forces on an item 9 which is to be transferred from a first item position and/or a first item orientation to a second item position and/or a second item orientation.

As is further apparent from Fig. 2, 3, the item transfer device 6 may comprise an item transfer element guiding unit 12 assigned to the item transfer elements 7. The item transfer element guiding unit 12 is configured to guide the item transfer elements 7 when being moved between the first position and/or the first orientation and the second position and/or the second orientation and a respective retracted and extended position. The item transfer element guiding unit 12 comprises a number of item transfer element guiding elements 13, such as guiding rails, guiding profiles, etc., configured to guide the item transfer elements 7 when being moved between the first position and/or the first orientation and the second position and/or the second orientation. Respective item transfer element guiding elements 13 may comprise a, particularly recess-like, receiving portion 14 for receiving a respective item transfer element 7.

As is apparent from Fig. 2, 3, respective item transfer element guiding elements 13 may form part of the item transfer element support structure 10.

As will be explained in context with Fig. 1 and 4, respective item transfer devices 6 may be provided at different locations of the plant 1.

According to the exemplary embodiment of Fig. 1, which is a side-view of a portion of the plant 1, a respective item transfer device 6 is provided in a conveying carriage 4 comprising at least one supporting interface 15, e.g. a receptacle, for supporting at least one item 9. A respective conveying carriage 4, which is exemplarily depicted as a conveying vehicle or conveying wagon in Fig. 1, may be moveably connectable or connected with at least one conveying element 5, e.g. a conveying rail, so as to be moveable along a conveying path defined by the conveying element 5.

The first item position and/or the first item orientation in a respective conveying carriage 4 is a support position and/or a support orientation in which the item 9 is supported by the conveying carriage 4 and the second item position and/or the second item orientation in a respective conveying carriage 4 is a transfer position (shown in dotted lines) and/or transfer orientation in which the item 9 is transferrable or transferred from the conveying carriage 4 to a process station 2 of the plant 1, i.e. particularly to a respective receiving portion 16 of the process station 2.

According to the exemplary embodiment of Fig. 4, which is a top-view of a portion of the plant 1, the item transfer device 6 is configured to transfer an item 9 from a first item position and/or a first item orientation to a second item position and/or a second item orientation (shown in dotted lines) in a process station 2 of the plant 1, particularly a process station 2 being configured to perform an additive manufacturing process and/or at least one preprocessing process for an additive manufacturing process and/or at least one postprocessing process for an additive manufacturing process.

The item transfer device 6 may be particularly, configured to transfer an item 9 from a first item position and/or a first item orientation to a second item position and/or a second item orientation in the process station 2. Thereby, the first item position and/or the first orientation may be an operating position, in which the item 9 is operable so as to perform an item-related first functionality, and the second item position and/or the second orientation may be a second operating position, in which the item 9 is operable so as to perform an item-related second functionality, or is a non-operating position in which the item 9 is not operable to perform an item-related functionality.

With regard to the exemplary option of providing an item transfer device 6 with a process station 2 being configured to perform an additive manufacturing process, the item transfer device 6 may be configured to transfer an item 9 from a first item position and/or a first item orientation to a second item position and/or a second item orientation. Thereby, the item 9 may be a build material application element of a build material application device, the build material application element being configured to apply an amount, particularly a specific amount of build material in the build plane of the process station 2 so as to form a build material layer which is to be selectively irradiated and consolidated by means of at least one energy beam, for instance. Other items 9 provided with a respective process station 2 may be conceivable.

With regard to the exemplary option of providing an item transfer device 6 with a process station 2 being configured to perform at least one preprocessing process for an additive manufacturing process, the item transfer device 6 may be configured to transfer an item 9 from a first item position and/or a first item orientation to a second item position and/or a second item orientation. Thereby, the item 9 may be a cleaning element, particularly a suction and/or blowing element, of a cleaning device, particularly a sucking and/or blowing device, the cleaning device being configured to remove non-consolidated build material from a powder receiving volume of a powder module 3, for instance. Other items 9 provided with a respective process station 2 may be conceivable.

With regard to the exemplary option of providing an item transfer device 6 with a process station 2 being configured to perform at least one postprocessing process for an additive manufacturing process, the item transfer device 6 may be configured to transfer an item 9 from a first item position and/or a first item orientation to a second item position and/or a second item orientation. Thereby, the item 9 may be an unpacking element, particularly a suction and/or blowing element, of an unpacking device, the unpacking element being configured to remove non-consolidated build material surrounding a three-dimensional object after the additive manufacture of the three-dimensional object, for instance. Other items 9 provided with a respective process station may be conceivable.

As is apparent from above, the plant 1 may comprise at least one process station 2 being configured to perform an additive manufacturing process and/or at least one preprocessing process for an additive manufacturing process and/or at least one postprocessing process for an additive manufacturing process. Hence, a respective process station 2 may be configured to perform at least one process-step for the actual additive build-up of at least one three-dimensional object, and/or may be configured to perform at least one process-step for preparing an additive manufacturing process, e.g. by preparing build material for a forthcoming additive manufacturing process, by preparing a powder module, such as a build module, i.e. a module in which the actual additive build-up of a three-dimensional object takes place, for a forthcoming additive manufacturing process, by preparing a process chamber of an additive manufacturing apparatus for a forthcoming additive manufacturing process, etc., and/or may be configured to perform at least one process-step for completing an additive manufacturing process, e.g. by unpacking an additively manufactured three-dimensional object from surrounding non-consolidated build material, by thermally treating an (unpacked) additively manufactured three-dimensional object, by treating the surface of an additively manufactured three-dimensional object, by sieving build material which was not consolidated during a previous additive manufacturing process, etc.

The plant 1 allows for implementing a method for transferring an item 9 from a first item position and/or a first item orientation to a second item position and/or a second item orientation, wherein a respective item transfer device 6 is used for transferring the item 9 from the first item position and/or the first item orientation to the second item position and/or the second item orientation.

Single, a plurality, or all features mentioned in context with a specific embodiment may also apply to other embodiments. Hence, a single, a plurality, or all features mentioned in context with a specific embodiment may be combined with at least one feature of another specific embodiment.

## Claims

1. Plant (1) for additively manufacturing at least one three-dimensional object, comprising a at least one item transfer device (6) being configured to transfer an item (9) from a first item position and/or a first item orientation to a second item position and/or a second item orientation, **wherein**
the at least one item transfer device (6) comprises at least one item transfer element (7) comprising a plurality of item transfer element members (8) being interconnected with each other via hinged connections.

2. Plant according to Claim 1, **wherein** the at least one item transfer element (7) is moveably supported in an item transfer element support structure (10), whereby the item transfer element (7) is moveably supported between a first item transfer element position and/or a first item transfer element orientation and a second item transfer element position and/or a second item transfer element orientation, whereby
the at least one item transfer element (7) is configured to exert a push-force or pull-force on an item (9) which is to be transferred from a first item position and/or a first item orientation to a second item position and/or a second item orientation by the at least one item transfer element (7).

3. Plant according to Claim 1 or 2, **wherein** the first item transfer element position and/or the first item transfer element orientation corresponds to a retracted position and/or a retracted orientation of the at least one item transfer element (7) in the item transfer element support structure (10), particularly compared with a reference position and/or orientation of the at least one item transfer element (7), and the second item transfer element position and/or the second item transfer element orientation corresponds to an extended position and/or an extended orientation of the at least one item transfer element (7), particularly compared with the reference position and/or orientation of the at least one item transfer element (7).

4. Plant according to any of the preceding Claims, **wherein** the hinged connection of adjacent item transfer element members (8) allows for a pivot motion of adjacent item transfer element members (8) relative to each other between a first pivot position and/or a first pivot orientation and a second pivot position and/or a second pivot orientation, whereby the item transfer element members (8) comprise contact portions which contact in the second pivot position and/or in the second pivot orientation so as to impede a further pivot motion beyond the second pivot position and/or the second pivot orientation.

5. Plant according to any of the preceding Claims, **comprising** an item transfer element drive unit (11) assigned to the at least one item transfer element (7), the item transfer element drive unit (11) being configured to generate a drive force so as to move the at least one item transfer element (7) between the first position and/or the first orientation and the second position and/or the second orientation.

6. Plant according to any of the preceding Claims, **comprising** an item transfer element guiding unit (13) assigned to the at least one item transfer element (7), the item transfer element guiding unit (13) being configured to guide the at least one item transfer element (7) when being moved between the first position and/or the first orientation and the second position and/or the second orientation.

7. Plant according to any of the preceding Claims, **wherein** the at least one item transfer element (7) is built as or comprises a linear chain.

8. Plant according to any of the preceding Claims, **wherein** the item transfer device (6) is provided with a conveying carriage (4) of a conveying device of the plant (1), whereby the item transfer device (6) is configured to transfer an item (9) from a first item position and/or a first item orientation to a second item position and/or a second item orientation in the conveying carriage (4).

9. Plant according to Claim 8, **wherein** the first item position and/or the first item orientation is an item support position and/or an item support orientation in which the item (9 is supported by the conveying carriage (4) and the second item position and/or the second item orientation is an item transfer position and/or an item transfer orientation in which the item (9) is transferrable or transferred from the conveying carriage (4) to a process station (2) of the plant (1).

10. Plant according to any of the preceding Claims, **wherein** the item transfer device (6) is provided with a process station (2) of the plant (1), particularly a process station (2) being configured to perform an additive manufacturing process and/or at least one preprocessing process for an additive manufacturing process and/or at least one postprocessing process for an additive manufacturing process, whereby the item transfer device (6) is configured to transfer an item (9) from a first item position and/or a first item orientation to a second item position and/or a second item orientation in the process station (2) of the plant (1).

11. Plant according to Claim 10, **wherein** the item transfer device (6) is configured to transfer an item (9) from a first item position and/or a first item orientation to a second item position and/or a second item orientation in the process station (2), whereby the first item position and/or the first orientation is an operating position, in which the item (9) is operable so as to perform an item-related first functionality, and the second item position and/or the second orientation is a second operating position, in which the item (9) is operable so as to perform an item-related second functionality, or is a non-operating position in which the item (9) is not operable to perform an item-related functionality.

12. Plant according to Claim 10 or 11, **wherein** the item transfer device (6) is configured to transfer an item (9) from a first item position and/or a first item orientation to a second item position and/or a second item orientation in a process station (2) being configured to perform an additive manufacturing process, whereby
the item (9) is a build material application element of a build material application device, the build material application element being configured to apply an amount, particularly a specific amount of build material in the build plane of the process station (2) so as to form a build material layer which is to be selectively irradiated and consolidated by means of at least one energy beam.

13. Plant according to any of Claims 10 - 12, **wherein** the item transfer device (6) is configured to transfer an item (9) from a first item position and/or a first item orientation to a second item position and/or a second item orientation in a process station (2) being configured to perform at least one preprocessing process for an additive manufacturing process, whereby the item (9) is a cleaning element, particularly a suction and/or blowing element, of a cleaning device, particularly a sucking and/or blowing device, the cleaning device being configured to remove non-consolidated build material from a powder receiving volume of a powder module (3).

14. Plant according to any of Claims 10 - 13, **wherein** the item transfer device (6) is configured to transfer an item (9 from a first item position and/or item orientation to a second item position and/or item orientation in a process station (2) being configured to perform at least one postprocessing process for an additive manufacturing process, whereby
the item (9) is an unpacking element, particularly a suction and/or blowing element, of an unpacking device, the unpacking element being configured to remove non-consolidated build material surrounding a three-dimensional object after the additive manufacture of the three-dimensional object.

15. Item transfer device (6) for a plant (1) for additively manufacturing three-dimensional objects, the item transfer device (6) being configured to transfer an item (7) from a first item position and/or a first item orientation to a second item position and/or a second item orientation, **comprising** at least one item transfer element (7) comprising a plurality of item transfer element members (8) being interconnected with each other via hinged connections.

16. Method for transferring at least one item (9) from a first item position and/or a first item orientation to a second item position and/or a second item orientation in a plant (1) for additively manufacturing three-dimensional objects, **wherein** at least one item transfer device (6) according to Claim 15 is used for transferring the at least one item (9) from the first item position and/or the first item orientation to the second item position and/or the second item orientation.
